Europäisches Patentamt

European Patent Office

Office européen des brevets

(11) Publication number: **0 468 148 A2**

# EUROPEAN PATENT APPLICATION

(21) Application number: **91107185.0**

(22) Date of filing: **03.05.91**

(51) Int. Cl.⁵: **B29C 69/00**, B29C 45/02,
B29C 45/16, E04F 15/10,
//B29K21:00

(30) Priority: **04.05.90 IT 2020690**

(43) Date of publication of application:
**29.01.92 Bulletin 92/05**

(84) Designated Contracting States:
**DE ES FR**

(71) Applicant: **PIRELLI PRODOTTI DIVERSIFICATI
S.p.A.
Piazzale Cadorna, 5
I-20123 Milano(IT)**

(72) Inventor: **Amurri, Cesare
Via Cairoli, 57
I-20099 - Sesto S. Giovanni (Milan)(IT)**
Inventor: **Gallizia, Achille
Via Castel Barco, 2
I-20136 - Milan(IT)**

(74) Representative: **Giannesi, Pier Giovanni et al
Pirelli S.p.A. Direzione Proprietà Industriale,
Piazzale Cadorna 5
I-20123 Milano(IT)**

(54) **Process and apparatus to make plugged plate-like elements, in particular for covering paving, and plugged plate-like element thus obtained.**

(57) A first elastomeric material (16) is compressed by a piston (13) to be transferred, through holes (11) formed in a dispensing plate (10) sealingly engaging the piston (13), to a plurality of recesses (8) formed in a moulding die (6), for manufacturing a plurality of plugs (5). After the material has been transferred to the forming recesses (8), the dispensing plate (10) and piston (13) are moved away from the moulding die (6) which is then lowered onto a pressure element (7) carrying a support slab (3) made from a second elastomeric material, by injection moulding. The plugs (5) are thereby applied to the support slab (3) and the slab and the plugs are then vulcanized. The plate-like element (1) thus obtained exhibits a support slab (3) on which a plurality of plugs (5) is homogeneously distributed, the material forming the plugs having physical features different from those of the material forming the slab.

FIG.1

The present invention relates to a process and an apparatus to make plugged plate-like elements, in particular for covering pavings, as well as the product obtained by the above process and apparatus.

The apparatus in accordance with the invention is of the type comprising:

- a pressure element arranged to engage a support slab made from elastomeric material;
- a moulding die movable towards the pressure element and exhibiting a plurality of homogeneously-distributed forming recesses arranged to house respective plugs of elastomeric material.

The obtained plugged plate-like element is of the type comprising:

- a support slab made from elastomeric material, exhibiting a base side designed to be laid on a surface to be covered;
- a plurality of plugs made of elastomeric material having a flattened conformation, joined to the support slab and distributed on the upper side of the slab, that is the side turned the opposite way relative to said base side.

In greater detail, the present invention is particularly concerned with the production of plate-like elements for covering pavings of the type made from two different elastomeric materials.

It is known that pavings in places subjected to public passage such as railway station platforms are often covered with plate-like elements of elastomeric material, substantially consisting of a support slab on the upper side of which, that is the exposed side, a plurality of plugs generally of cylindrical flattened conformation is provided, said plugs being homogeneously distributed close to one another.

In many cases these plate-like elements are formed with two different elastomeric materials in order to meet particular requirements.

For example, the use of two different elastomeric materials is made necessary when the exposed surface is wished to exhibit a different quality than the support slab.

In order to meet the above requirements, in accordance with the Italian Patent No. 948316 two sheets made from a first and a second elastomeric material respectively, are first paired so as to define a flat laminar structure which is then submitted to a moulding action resulting in the formation of plugs.

In the semi-finished product thus obtained the first elastomeric material on the exposed side thereof, that is the one exhibiting the plugs, will be completely coated with the second elastomeric material.

It will be therefore necessary, once the vulcanization of the semi-finished product has been performed, to carry out a cutting or mechanical-abrasion action by which the upper ends of the plugs are to be removed in order to enable to first elastomeric material to appear on the surface of the second elastomeric material in the finished product.

After the foregoing description it is apparent that although this method has been widely known and used in this particular field, it has some problems.

One problem is due to the difficulty encountered in carrying out the cutting of the plugs in a precise manner.

Another drawback consists in the great waste of material, as a result of the scraps that are obtained from the plug cutting or the mechanical-abrasion operation.

A further drawback is represented by the fact that the first elastomeric material forming the plugs inevitably covers the whole plate-like element on the base side thereof which will rest on the paving to be covered.

This fact entails an useless waste of the first elastomeric material which is normally more expensive than the other material used, since it must possess the above specified technical and physical features.

Still another drawback is given by the fact that the plugs of the obtained covering elements inevitably exhibit flat top surfaces having sharp edges.

This configuration is not favourable to the ends of a good wearing resistance and, in addition, makes it difficult to remove dirt that will be stored on the laminar element in use as time goes by.

In order to eliminate the last-mentioned drawback, in the US Patent No. 4,731,139 the plugs are provided to be submitted, during the cutting operation, to an axial compression action. In this manner, when the compression action stops, the cut plugs take a rounded configuration.

These methods too, however, are subjected to all the other drawbacks previously described.

The main object of the present invention is substantially to solve all problems of the known art by a process that, without involving any cutting or abrasion action which results in the production of scraps or waste material, enables a plugged plate-like element to be achieved by the use of two different elastomeric materials in which one elastomeric material will exclusively form the plugs whereas the second elastomeric material will form the support slab to which the plugs are applied. In this manner the obtained plugged plate-like element will mainly consist of an inexpensive elastomeric material and will only have a low percent of valuable elastomeric material.

Another important object of the invention is to manufacture the plate-like elements in a simple, precise and reliable manner.

Still another object of the invention is to provide a process enabling the produced plugs to have any desired conformation.

The foregoing and further objects that will become more apparent from the following description are substantially achieved by a process to make plugged plate-like elements, in particular for covering pavings, characterized in that it comprises the following steps:

- moulding a first elastomeric material to make a plurality of plugs homogeneously distributed over a predetermined area;
- manufacturing a support slab by working a second elastomeric material;
- applying the plugs to the support slab;
- vulcanizing the support slab and the plugs applied thereto.

In accordance with the present invention, this process is put into practice by an apparatus to make plugged plate-like elements, in particular for covering pavings, characterized in that it comprises a dispensing plate to be operatively engaged to the moulding die and exhibiting a plurality of transferring holes putting said forming recesses in communication with a collection chamber formed in the dispensing plate, on the opposite side from the moulding die; a piston to be slidably engaged into the reception chamber and movable towards the dispensing plate to transfer a first elastomeric material contained in the collection chamber to the forming recesses, said support slab being made separately from the plugs and being coupled to the plugs as a result of the mutual moving close of the moulding die and the pressure element.

Still in accordance with the invention, with the process and apparatus of the invention a plugged plate-like element is obtained which is characterized in that said plugs are formed from a first elastomeric material and the support slab from a second elastomeric material having features different from those of the first elastomeric material.

Further features and advantages of the invention will be best understood from the detailed description of a preferred embodiment of a process and an apparatus to make plugged plate-like elements, in particular for covering pavings, and the product obtained by the above process and apparatus, given hereinafter by way of non-limiting example with reference to the accompanying drawings, in which:

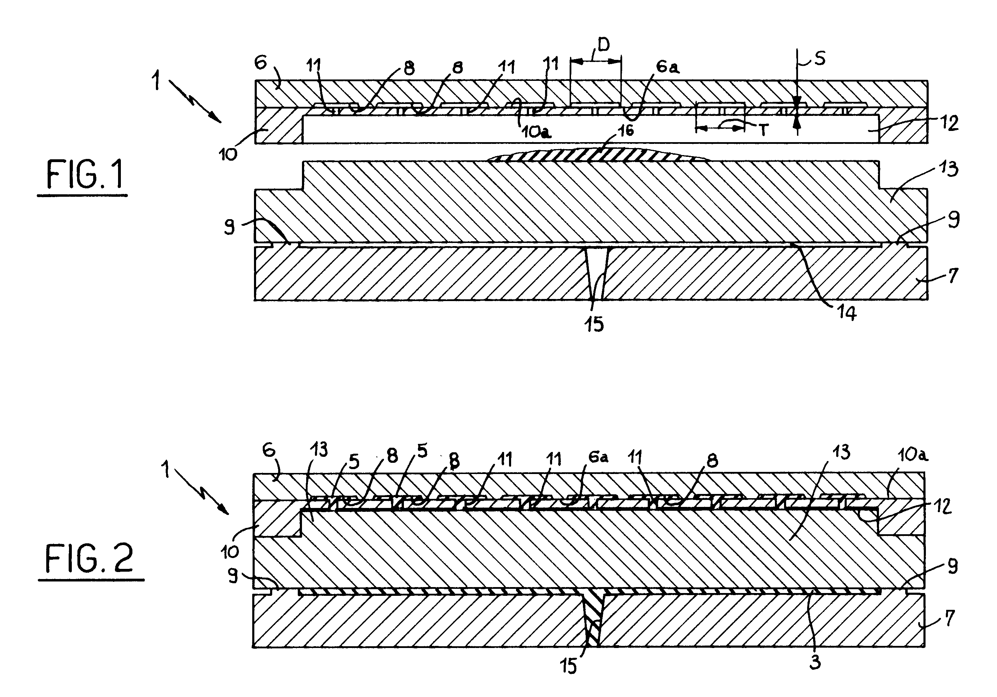

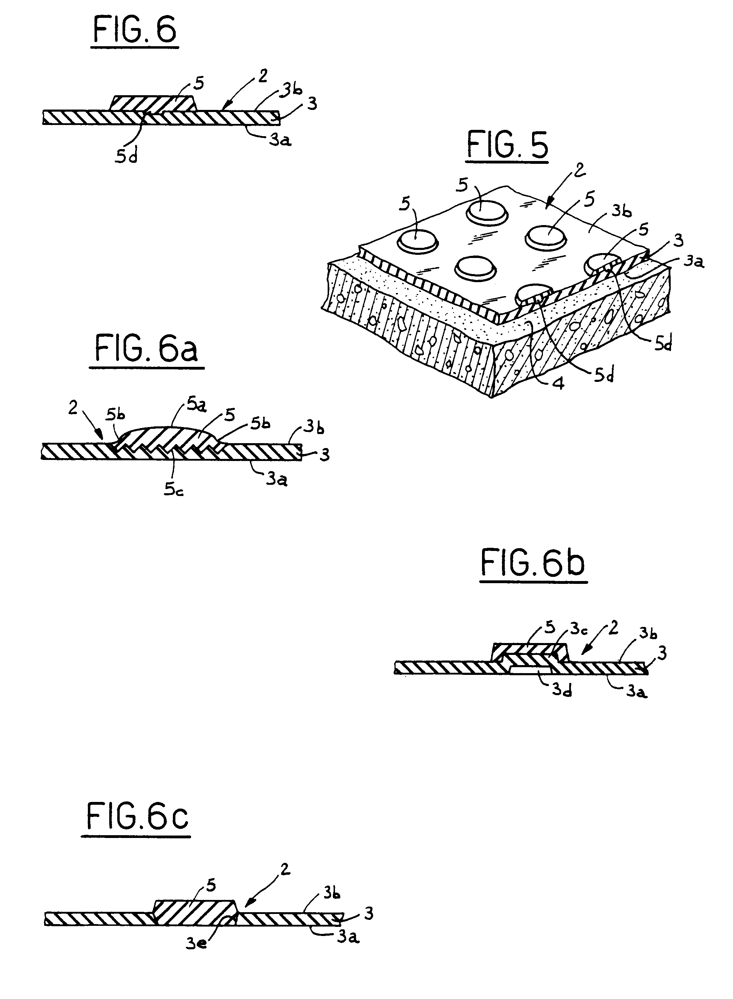

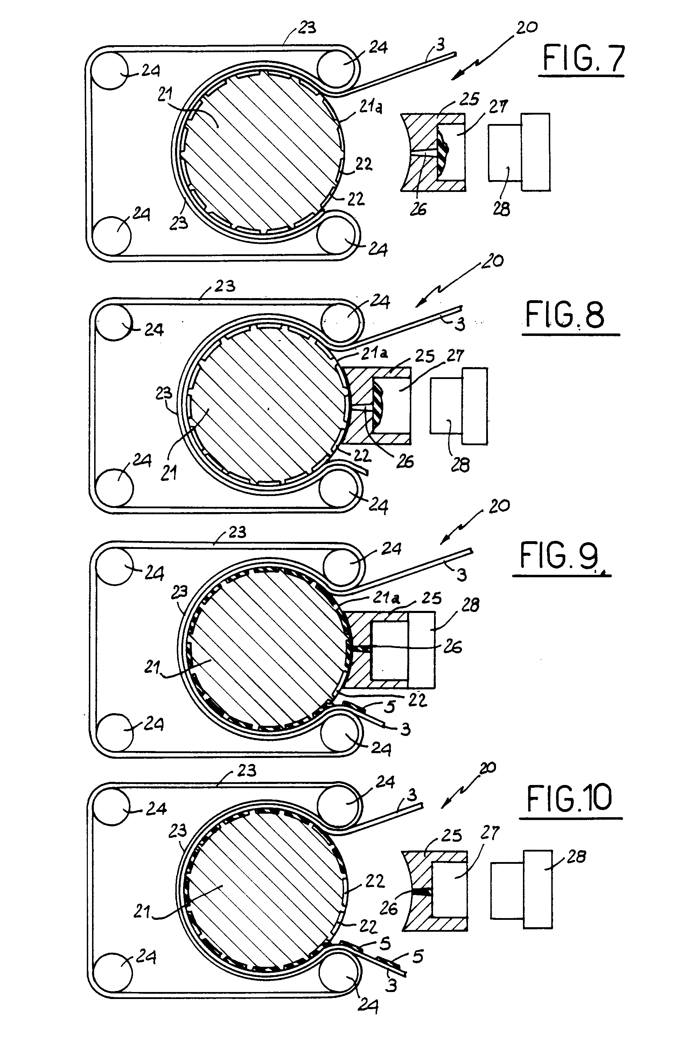

- Fig. 1
is a diagrammatic cross-sectional view of the apparatus of the invention during a first operating step;
- Fig. 2
is a diagrammatic sectional view of the apparatus shown in Fig. 1 during a following operating step;
- Fig. 3
is still a cross-sectional view of the apparatus in a further operating step;
- Fig. 4
is a cross-sectional view of the apparatus in an end step of the operating cycle;
- Fig. 5
is a perspective fragmentary view of the product of the invention;
- Fig. 6
shows a detail to an enlarged scale of the product of the invention sectioned according to the diametrical plane of one of the plugs;
- Figs. 6a, 6b and 6c
are sections similar to the one shown in Fig. 6, showing alternative embodiments of the product that can be obtained with the apparatus and process of the invention;
- Fig. 7
is a diagrammatic view of a second embodiment of the apparatus in accordance with the invention, during a first step of the operating cycle;
- Fig. 8
shows the apparatus of Fig. 7 in a subsequent step of the operating cycle;
- Fig. 9
shows the apparatus in a third step of the operating cycle;
- Fig. 10
shows the second embodiment of the apparatus in a final step of the operating cycle.

Referring particularly to Figs. 1 to 4, an apparatus to make plugged plate-like elements to be particularly used for covering pavings, in accordance with the present invention, has been generally identified by reference numeral 1.

Apparatus 1 is adapted to produce a plugged plate-like element 2 of the type comprising a support slab 3 of elastomeric material exhibiting a base side 3a designed to be laid in contact with a surface 4 to be covered and an upper side 3b on which a plurality of plugs 5 of elastomeric material preferably having a flattened substantially cylindrical configuration is homogeneously distributed.

In accordance with the present invention, the plugged plate-like element 1 is manufactured in accordance with a process providing the following steps:

- moulding a first elastomeric material so as to make a plurality of plugs 5 homogeneously distributed over a predetermined area;
- manufacturing a support slab 3 by working a second elastomeric material;
- applying plugs 5 to the support slab 3;
- vulcanizing the support slab 3 and the plugs 5 applied thereto.

For the purpose, apparatus 1 comprises a moulding die 6 substantially extending according to a horizontal plane and vertically movable towards a pressure element 7, extending under the moulding die, parallelly thereto.

The moulding die 6 has a plurality of forming recesses 8 at the lower part thereof, which are homogeneously distributed over a predetermined area and each of them being arranged to house one of the plugs 5 to be applied to the plugged plate-like element 2, as best clarified in the following.

The pressure element 7 is in turn arranged to engage, between shoulder kerbs 9 provided thereon, the support slab 3 designed to receive the plugs 4.

In an original manner, apparatus 1 further comprises a dispensing plate 10 extending parallelly to the moulding die 6 and adapted to be operatively engaged thereto.
In greater detail, the dispensing plate 10 has a substantially flat upper surface 10a to be coupled with the lower surface 6a of the moulding die 6, so as to obtain a tight seal with the edges of the forming recesses 8.

The dispensing plate 10 is also provided with a plurality of transferring holes or passage channels 11, each of which brings one of the forming recesses 8 into communication with a collection chamber 12 formed in the dispensing plate, on the opposite side from the moulding die 6.

Associated with the dispensing plate 10 is a piston 13, which also has a substantially plate-like configuration and extends between the dispensing plate and the pressure element 7, parallelly thereto.

The piston 13 is adapted to be slidably engaged to the collection chamber 12 for purposes to be clarified in the following.

In addition, piston 13 is preferably provided to act by contact on the kerbs 9 so as to define, together with the pressure element 7, a moulding chamber 14 into which an injection nozzle 15 associated with the pressure element itself opens, for the purposes to be illustrated later.

Still in accordance with the present invention, the dispensing plate 10 and piston 13 are provided to be simultaneously movable in a substantially horizontal direction from an engagement position in which they are interposed between the moulding die 6 and the pressure element 7 (Figs. 1 and 2), and an idle position in which they are spaced apart sideways from the die 6 and the pressure element 7 to enable the die to move close to the pressure element itself (Figs. 3 and 4).

In accordance with the concerned process, operation of the apparatus in accordance with the embodiment shown in Figs. 1 to 4 is as follows.

At the beginning of the operating cycle, the dispensing plate 10 and piston 13 are located in the use position, as viewed from Fig. 1.

More particularly, the dispensing plate 10 is operatively engaged to the moulding die 6 so that its upper surface 10a is in contact with the lower surface 6a of the moulding die. Piston 13, in turn, lies on the kerbs 9 provided on the pressure element 7.

Under this situation a predetermined amount of a first elastomeric material in a raw state, denoted by 16 in Fig. 1, is disposed on piston 13 either manually by an operator or by automatic loading means.

Subsequently, by lowering the moulding die 6 and therefore the dispensing plate 10, the engagement of piston 13 into the collection chamber 12 is achieved. Under this situation the first elastomeric material 16 contained in the collection chamber 12 is forced to pass through the transferring holes 11 so as to fill the forming recesses 8 provided in the moulding die 6.

The moulding action thus produced on the first elastomeric material 16 gives therefore rise to the simultaneous formation of a plurality of plugs 5 homogeneously distributed over a predetermined area without involving the formation of burrs projecting from the plug contour, which plugs are designed to be applied to the support slab 3.

It is to be noted that in order to avoid small deformations of the die 6 that whould give rise to inconveniences, the ratio between the maximum diameter of each of the forming recesses 8, denoted by "D" in Fig. 1, and the thickness of the dispensing plate 10 denoted by "S" should preferably have a value ranging between 2.5 and 5. More particularly, the thickness "S" of the dispensing plate 10 should be calculated based on the following formula:

$$S = \frac{D}{2} \sqrt{\frac{P\ K}{\sigma}}$$

where:

P   is the pressure value existing on the dispensing plate 10 in operation;

σ   is the permissible bending unit load of the material forming the dispensing plate 10;

K   is a coefficient included between 0.83 and 1.18.

In the embodiment described with reference to Figs. 1 to 4, the production of plate-like elements of square plan configuration is provided, their side being of 500 mm, where the thickness of the support slab 3 is of 3 mm whereas that of the plugs 5 is 2 mm, the plugs 5 having a diameter of 25 mm.

In this case the thickness "S" of the dispensing plate 10 is provided to be of 7 mm.

With the above specified size parameters, due to the strong forces involved in the accomplishment of the process of the invention, the dispensing plate 10 and moulding die 6 inevitably undergo bending microdeformations the value of which can be included, just as an indication, between 0.001 and 0.5 mm.

If these microdeformations should not be suitably controlled, they could give rise to structure faults on the finished products, in the form of colour smudges or at all events burrs of the material constituting the plugs 5 that would extend to the support slab 3.

In order to avoid these phenomena, it is necessary to be sure that the elastic bending deformations inevitably undergone by the dispensing plate 10 and moulding die 6 do not give rise to any separation between the upper surface 10a of the dispensing plate and the lower surface 6a of the moulding die.

In this connection it is to be noted that each of the forming recesses 8 subtends an area susceptible of deformation on the dispensing plate 10, which area is defined by the section portion denoted by "T" in Fig. 1, the bending behaviour of which can be compared to that of a beam resting on two points represented by the opposite edges of the recess itself.

For the purpose of ensuring a constant contact between the upper surface 10a of the dispensing plate 10 and the lower surface 6a of the moulding die 6, each area susceptible of deformation "T" that can be detected in the section of the dispensing plate must have a bending stiffness substantially equal to the bending stiffness that can be found on the whole moulding die 6 in use.

In the above embodiment this effect is achieved by giving a thickness of 25 mm to the moulding die 6.

Preferably the support slab 3 is produced in the moulding chamber 14 by injecting thereinto a second elastomeric material having different features than the first elastomeric material, through the nozzle 15. The manufacture of the support slab 3 takes place immediately after the moulding of the plugs 5, but can optionally be carried out also before or during this moulding step, the pressure element 7 and piston 13 being arranged in the conditions shown in Figs. 1 and 2.

The support slab 3 has the predetermined and desired sizes by virtue of the indeformable character of the walls enclosing the injection space, as the thicknesses of the piston 13 and pressure element 7 drawn in Fig. 1 clearly show.

Alternatively, the support slab 3 can also be manufactured separately and arranged so as to lie on the pressure element 7 for the application of the plugs 5.

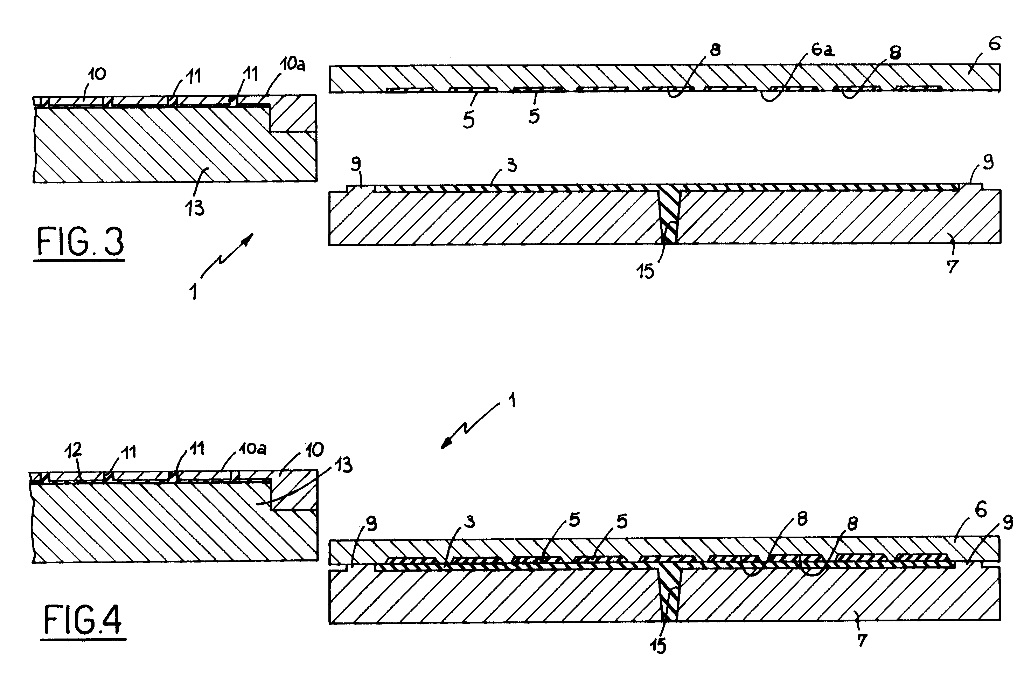

For the application of the plugs 5, the piston 13 and dispensing plate 10 are first brought to the idle position so as to be located spaced apart from the moulding die 6, as shown in Fig. 3, after carrying out the relative moving away between the die and the pressure element.

Following this operation, apparatus 1 will be disposed in a condition in which the moulding die 6 engages the plugs 5 within the respective forming recesses 8, at a raised position relative to the pressure element 7, whereas the pressure element 7 itself supports the support slab 3 resting thereon.

At this point the moulding die 6 is moved close to the pressure element 7 so that the plugs 5 can be applied to the support slab 3, as shown in Fig. 4.

The moulding die 6 and pressure element 7 are held in this condition as far as the vulcanization of the elastomeric materials forming the plugs 5 and support slab 3 has taken place. This vulcanization step is conventionally assisted by the action of heating means not shown as known per se, associated with the moulding die 6.

When the vulcanisation step has been completed, the moulding die 6 will be raised again to enable the obtained plugged plate-like element 2 to be removed.

The plate-like element thus obtained will have the particular quality of exhibiting plugs 5 made from a first elastomeric material applied to a support slab 3 formed from a second elastomeric material of quite different characteristics than the first elastomeric material.

Figs. 6, 6a, 6b and 6c represent some embodiments of the plugged elements 2 that can be made by adopting processes in which the plugs and the slab are formed separately and the plugs are then joined to the slab, said embodiments being in particular obtainable with the process of the present invention.

These embodiments are distinguishable from one another for the structural shape of the plug 5 and/or the configuration of the support slab at the engagement area with the plug.

All said embodiments can be obtained by merely modifying the configuration of the forming recesses 8, the upper surface 10a of the dispensing plate 10 and the upper surface of the pressure element 7.

Shown in Fig. 6 is an embodiment in which the plug 5 has a substantially frusto-conical configuration and is joined to the support slab 3 at substantially flat surfaces thereof.

In greater detail, each plug 5 is preferably provided to have, in the middle, a small surface relief 5c which is buried in the elastomeric material of the support slab 3. The surface relief 5c advantageously ensures a steady positioning of the corresponding plug 5 in connection with transverse movements, both during the production of the plate-like element and during the use of the same.

It is to be noted that advantageously said reliefs 5c are directly obtained by effect of the adhesiveness of the elastomeric material forming them when the dispensing plate 10 and piston 13 are moved apart sideways from the moulding die 6.

Shown in Fig. 6a is a plug the sectional profile of which exhibits a convex upper surface 5a joined to the upper side 3b of the support slab 3 by means of curvilinear connecting portions 5b.

Still shown in Fig. 6a is the possibility of joining the plug 5 to the support slab at areas 5c thereof exhibiting a wrinkled surface extension.

With reference to Fig, 6b, one can see that each plug 5 can also be joined to the support slab 3 at a surface relief 3c formed on the upper side 3b of the slab itself. As still viewed from said figure, the plug 5 can also be joined to the support slab 3 correspondingly to a surface recess 3d formed on the base side 3a of the slab itself.

Finally, in the embodiment shown in Fig. 6c the plug is joined to the support slab 3 at a through hole 3e formed in the slab.

Figs 7 to 10 show a second embodiment of the apparatus of the invention generally denoted by 20, seen during different steps of the operating cycle.

In this embodiment the moulding die identified by 21 has a cylindrical configuration and the forming recesses 22 are distributed on its outer surface 21a. The moulding die 21 is operable in rotation according to a stepped movement about its own axis and is partly wrapped by the pressure element 23 now in the form of a ribbon preferably made of steel, guided on respective idler rollers 24 and dragged along by the rotary motion imparted to the moulding die 21.

In this embodiment too, apparatus 20 further comprises a dispensing plate 25 adapted to be operatively engaged to the outer cylindrical surface 21a of the moulding die 21, at an area where the pressure element 23 is not present. In greater detail, in this embodiment the dispensing plate 25 is provided to be movable from an idle position in which it is slightly spaced apart from the moulding die 21 (Figs. 7 and 10) to an operating position in which it acts by contact on the cylindrical surface 21a of the die itself, preferably along a generatrix of the latter.

Formed in the dispensing plate 25 is a plurality of transferring holes 26 (only one of which is shown in the accompanying drawings), each of them being arranged to bring one of the forming recesses 22 into communication with a collection chamber 27 formed in the dispensing plate 25, when the plate is in the work condition.

The collection chamber 27 is designed to be slidably engaged by a piston 28 movable towards the dispensing plate 25.

In accordance with the operation of apparatus 20, the support slab 3 previously produced or directly coming from the extruder mouth is provided to be continuously fed between the pressure element and the moulding die 21, set in rotation in a stepped mode.

At the same time, the dispensing plate 25 and piston 28 cooperate together so that, each time the die 21 stops rotating, the forming recesses 22 aligned in register with the dispensing plate are filled with elastomeric material.

The plugs 5 thus obtained are matched with the support slab 3 at the engagement area between the pressure element 23 and the moulding die 21. Then the plugs 5 and the slab 3 will be vulcanized upon the action of heating means not shown as known per se, associated with the moulding die 6 over the whole time necessary for the obtained plugged plate-like element 2 to come out of apparatus 20, due to the rotation of the die 6.

As can be deduced from Figs 7 to 10, in accordance with the operating cycle of the dispensing plate 25 and piston 28, the first elastomeric material designed to form the plugs 5 is first disposed in the collection chamber 27. Under this situation the dispensing plate 25 is in the idle position and the piston 28 is spaced apart from the plate itself (Fig. 7).

At this time the piston 28 moves close to the dispensing plate 25 in order to cause the transferring of the elastomeric material from the collection chamber 27 to the forming recesses 22 (Fig. 9).

Finally the dispensing plate 25 and piston 28 are moved away from the moulding die 21 which will carry out an angular rotation sufficient to bring a new row of recesses 22 to a position enabling them to receive the elastomeric material (Fig. 10).

The present invention attains the intended purposes.

The process and apparatus in reference in fact allow plate-like elements to be manufactured in a practical, precise and reliable manner and without waste of material in the form of scraps, in which plate-like elements the plugs 5 are made of an elastomeric material different as regards colour and/or physico-technical features, from the material forming the support slab 3.

Advantageously, in the plate-like element of the invention the more valuable elastomeric material, that is the one that must exhibit a greater mechanical resistance to wear together with a high friction coefficient, will only form the plugs 5.

The whole support slab 3 can be advantageously made from inexpensive elastomeric material, or at all events a material having a lower cost than the material used for the plugs 5.

It will be recognized that the process and apparatus of the invention advantageously enable the obtention of plugged plate-like elements in which both the support slab 3 and the plugs 5 are structurally perfect.

In addition, the concerned process and apparatus enable any desired configuration to be given to the plugs 5.

Obviously modifications and variations may be made to the invention as conceived, all of them falling within the scope of the inventive idea.

For example, the process and apparatus could be used to form the plugs and the slab with one and the same material, at different times and/or even simultaneously.

Obviously, as a variant to the above description in connection with Figs. 1 to 4, the displacement of the piston and slab could take place in a direction perpendicular to the mould closing direction.

Still by way of example, the plate-like element could consist of plugs of several different colours, each of them being in turn different from the colour of the support slab 3.

In fact it is possible first to dispose a dispensing plate 10 having holes 11 only located in register with some of the recesses 8 so as to form red plugs, for example. Subsequently the dispensing plate 10 is located so that holes 11 are disposed only in register with the recesses 8 which in the previous step were closed by the plate, thereby obtaining green plugs, for example. Afterwards, as already discussed, the red and green plugs will be applied to the plate.

**Claims**

1. A process to make plugged plate-like elements, in particular for covering pavings, characterized in that it comprises the following steps:
   - moulding a first elastomeric material (16) to make a plurality of plugs (5) homogeneously distributed over a predetermined area;
   - manufacturing a support slab (3) through the working of a second elastomeric material;
   - applying the plugs (5) to the support slab (3);
   - vulcanizing the support slab (3) and the plugs (5) applied thereto.

2. A process according to claim 1, characterized in that the moulding of the first elastomeric material comprises the following steps:
   - introducing the first elastomeric material (16) between a piston (13, 28) and a dispensing plate (10, 25) having a collection chamber (12, 27) to be slidably engaged by the piston (13, 28) and a plurality of homogeneously distributed transferring holes (11, 26) communicating with said collection chamber (12, 27);
   - coupling the dispensing plate (10, 25) with a moulding die (6, 21) having a plurality of homogeneously distributed forming recesses (8, 22) corresponding in shape to the plugs (5) and each communicating with at least one of said transferring holes (11, 26);
   - engaging the piston (13, 28) into the collection chamber (12, 27) in order to cause a homogeneous distribution of the elastomeric material in said chamber and the subsequent transferring of said material to the forming recesses (8, 22).

3. A process according to claim 2, characterized in that the production of the support slab (3) is carried out by injecting the second elastomeric material into a moulding chamber (14) defined between a pressure element (7) and said piston (13), on the opposite side from the dispensing plate (10).

4. A process according to claim 2, characterized in that the application of the plugs (4) to the support slab (3) comprises the steps of:
   - moving the piston (13, 28) and dispensing plate (10, 25) away from the moulding die (6, 21);
   - moving the moulding die (6, 21) close to said pressure element (7, 23) so as to cause the plugs (5) engaged in the forming recesses (8, 22) to adhere to the support slab (3) disposed on the pressure element (7, 23).

5. A process according to claim 1, characterized in that the application of the plugs (5) to the support slab (3) comprises the steps of:
   - driving the moulding die (21) in rotation about its own axis, said moulding die (21) exhibiting a cylindrical configuration and having the forming recesses (22) distributed along its outer surface (21a);
   - continuously feeding the support slab (3) between the moulding die (21) and pressure element (23), said pressure element being in the form of a ribbon partially wrapped about the moulding die (21) and being dragged along by the rotatory motion of the die itself so as to make the plugs (5) adhere to the support slab (3).

6. A process to make plugged plate-like elements comprising plugs (5) made from a first elastomeric material and a support slab (3) made from a second elastomeric material, characterized in that it comprises the steps of:
   - compressing the first elastomeric material (16);
   - forcing the elastomeric material (16) through passage channels (11, 26) provided across a plate-like surface (10a);
   - filling forming recesses (8, 22) corresponding to the plugs (5) and disposed in a moulding die (6, 21) with the elastomeric material (16) passing through the passage channels (11, 26);

- forming a support slab (3) with the second elastomeric material;
- applying the plugs (5) by pressure to the support slab (3) and carrying out the vulcanization step.

**7.** A process according to claim 6, characterized in that the contour of the forming recesses (8, 22) is continuously held in contact with the plate-like surface (10a) in the presence of bending deformations of the moulding die (6, 21), so as to avoid the first elastomeric material (16) escaping from the forming recesses (8, 22) to the outside.

**8.** A process according to claims 6, 7, characterized in that the plug (5) manufacture is controlled in order to avoid burrs being formed on the support slab (3) by arranging, before the moulding, a plate-like surface (10a) in which, in a plane vertical to its maximum extension, the bending stiffness of the portion of the plate-like surface (10a) supported by the contour of the opposite forming recesses (8, 22) is substantially equal to the bending stiffness of the moulding die (6, 21).

**9.** An apparatus to make plugged plate-like elements, in particular for covering pavings, comprising:

- a pressure element (7, 23) arranged to engage a support slab (3) made from elastomeric material;
- a moulding die (6, 21) movable towards the pressure element (7, 23) and exhibiting a plurality of homogeneously distributed forming recesses (8, 22) arranged to house respective plugs (5) of elastomeric material;

characterized in that it comprises:

- a dispensing plate (10, 25) to be operatively engaged to the moulding die (6, 21) and exhibiting a plurality of transferring holes (11, 26) putting said forming recesses (8, 22) in communication with a collection chamber (12, 27) formed in the dispensing plate (10, 25), on the opposite side from the moulding die (6, 21);
- a piston (13, 28) to be slidably engaged into the reception chamber (12, 27) and movable towards the dispensing plate to transfer a first elastomeric material (16) previously contained in the collection chamber to the forming recesses (8, 22), said support slab (3) being made separately from the plugs (5) and being coupled to the plugs as a result of the displacement of the moulding die (6, 21) and pressure element (7, 23) moving close to each other.

**10.** An appartus according to claim 9, characterized in that the pressure element (7), piston (13), dispensing plate (10) and moulding die (6) extend according to parallelly-superposed horizontal planes, said dispensing plate (10) and piston (13) being simultaneously movable, in a substantially horizontal direction, from a use position in which they are interposed between the moulding die (6) and the pressure element (7), to an idle position in which they are spaced apart sideways from the die (6) and the pressure element (7) to enable the die (6) to move close to the pressure element.

**11.** An apparatus according to claim 10, characterized in that the pressure element (7) exhibits at least an injection nozzle (15) opening into the upper part thereof for sending a second elastomeric material designed to form the support slab (3) to a moulding chamber (14) defined between said piston (13) and the pressure element itself.

**12.** An apparatus according to claim 9, characterized in that the ratio between the maximum diameter of each forming recess (8, 22) and the thickness of the dispensing plate (10, 25) ranges between 2.5 and 5.

**13.** An apparatus according to claim 9, characterized in that each of said forming recesses (8, 22) subtends, on the dispensing plate (10, 25), an area subjected to deformation the bending stiffness of which is substantially equal to the bending stiffness of said moulding die (6, 21).

**14.** An apparatus according to claim 9, characterized in that said moulding die (21) exhibits a cylindrical conformation provided with said forming recesses (22) distributed over the outer surface (21a) thereof, said pressure element (23) being in the form of a continuous ribbon partially wrapped about the moulding die (21) so as to cause the application of the plugs (5) carried by the forming recesses (22) to the support slab (3) which is continuously fed between the pressure element (23) and the die (21), as a result of the die being set in rotation about its own axis.

**15.** An apparatus according to claim 14, characterized in that the dispensing plate (25) and piston (28) extend and operate along a generatrix of the moulding die (21).

**15.** A plugged plate-like element in particular for covering pavings, comprising:

- a support slab (3) made from elastomeric material, exhibiting a base side (3a) adapted to be laid on a surface to be covered;
- a plurality of plugs (5) made of elastomeric material having a flattened conformation, joined to the support slab (3) and homogeneously distributed on the upper side (3b) of the slab (3), that is the side turned the opposite way relative to said base side (3a),

characterized in that said plugs (5) are formed from a first elastomeric material, said support slab (3) being made from a second elastomeric material having features different from those of the first elastomeric material.

**17.** A plugged plate-like element according to claim 16, characterized in that the plugs (5) are joined to the support slab (3) at respective areas having a wrinkled surface extension (5c).

**18.** A plugged plate-like element according to claim 16, characterized in that each plug (5) is joined to the support slab (3) at a surface relief (3c) formed on the upper side (3b) of the slab itself.

**19.** A plugged plate-like element according to claim 16, characterized in that each plug (5) is joined to the support slab (3) at a surface recess (3d) formed on the base side (3a) of the slab itself.

**20.** A plugged plate-like element according to claim 16, characterized in that each of said plugs (5) exhibits a substantially cylindrical configuration having a convex top side (5a) joined to the upper side (3b) of the slab (3) by curvilinear connecting portions (5b).

**21.** A plugged plate-like element according to claim 16, characterized in that each plug (5) substantially has a frusto-conical configuration.

**22.** A plugged plate-like element according to claim 16, characterized in that each plug (5) is joined to the support slab (3) at a through hole (3e) formed in the slab itself.

FIG.1

FIG.2

EP 0 468 148 A2

FIG.3

FIG.4

EP 0 468 148 A2

# FIG.6

# FIG.5

# FIG.6a

# FIG.6b

# FIG.6c

FIG.7

FIG.8

FIG.9

FIG.10